# EUROPEAN PATENT APPLICATION

(11) **EP 4 572 474 A1**
(43) Date of publication of application: **18.06.2025**
(21) Application number: 23862502.4
(22) Date of filing: 08.09.2023
(51) Int. Cl.: H04W 72/04, H04W 76/10

(54) **LINK CONFIGURATION METHOD AND APPARATUS, AND REMOTE USER EQUIPMENT, NETWORK DEVICE AND STORAGE MEDIUM**

(30) Priority: 09.09.2022 CN 202211104951
(71) Applicant: CHINA MOBILE COMMUNICATIONS GROUP CO., LTD, Beijing 100032 (CN); CHINA MOBILE COMMUNICATIONS GROUP CO., LTD., Beijing 100032 (CN)
(72) Inventor: HUANG, Xueyan, Beijing 100032 (CN); XU, Xiaodong, Beijing 100032 (CN); LIU, Liang, Beijing 100032 (CN)
(74) Representative: Murgitroyd & Company
(86) International application number: PCT/CN2023/117682
(87) International publication number: WO 2024/051808

(57) **Abstract**

The present disclosure provides a link configuration method, apparatus, remote UE, network device, and storage medium. The method includes: configuring, by a network device, a first SRB and/or a second SRB on a first link to a remote UE. The first link represents an NR direct link or an indirect link.

## Description

### CROSS-REFERENCE TO RELATED APPLICATION

The present application is filed based on and claims the priority of Chinese Application No. 202211104951.4 filed on September 9, 2022, the disclosure of which are incorporated in their entireties by reference herein.

### TECHNICAL FIELD

The present disclosure relates to the field of communication technologies, and in particular, to a link configuration method, apparatus, remote UE, network device and storage medium.

### BACKGROUND

In the related art, a remote User Equipment (UE) can access a network device through both a relay UE and a New Radio (NR) direct link, but there is an issue of insufficient network robustness.

### SUMMARY

In order to solve the problems in the related art, embodiments of the present disclosure provide a link configuration method, apparatus, remote UE, network device, and storage medium.

The technical solutions of the embodiments of the present disclosure are implemented as follows.

One embodiment of the present disclosure provides a link configuration method, applied to a network device, the method including:
configuring a first Signaling Radio Bearer (SRB) and/or a second SRB on a first link to a remote user equipment (UE); wherein the first link represents a New Radio (NR) direct link or an indirect link.

In the above solution, the configuring the first SRB and/or the second SRB on the first link to the remote UE, includes:
adding and activating a split SRB 1, and/or adding and activating a split SRB2, on the NR direct link to the remote UE.

In the above solution, the method further includes:
deactivating SRB1 and/or SRB2 on the indirect link; or
keeping SRB 1 and/or SRB2 on the indirect link in an active state.

In the above solution, the configuring the first SRB and/or the second SRB on the first link to the remote UE, includes at least one of:
adding a split SRB 1 on the indirect link to the remote UE and configuring the split SRB 1 to be in an inactive state;
adding a split SRB2 on the indirect link to the remote UE and configuring the split SRB2 to be in an inactive state;
adding and activating a split SRB 1 on the indirect link to the remote UE;
adding and activating a split SRB2 on the indirect link to the remote UE.

In the above solution, the method further includes:
during activation of the NR direct link, keeping SRB 1 and/or SRB2 on the NR direct link in an active state.

In the above solution, the method further includes:
activating SRB 1 and/or SRB2 on the indirect link when any one of the following conditions is met:
deletion or deactivation of the NR direct link;
occurrence of a radio link failure (RLF) on the NR direct link;
reconfiguration of the indirect link as a primary path.

In the above solution, the method further includes:
reconfiguring split SRB 1 on the NR direct link as SRB 1, and/or reconfiguring split SRB2 on the NR direct link as SRB2, when any one of the following conditions is met:
the remote UE adding the NR direct link;
deletion or deactivation of the indirect link;
occurrence of RLF on an air interface of the remote UE;
failure of a sidelink between a relay UE and the remote UE;
reconfiguration of the NR direct link as a primary path.

In the above solution, the method further includes:
reconfiguring split SRB 1 on the indirect link as SRB 1, and/or reconfiguring split SRB2 on the indirect link as SRB2, when any one of the following conditions is met:
deletion or deactivation of the NR direct link;
occurrence of RLF on the NR direct link;
reconfiguration of the indirect link as a primary path.

In the above solution, the method further includes:
when the remote UE adds or activates the NR direct link, configuring the NR direct link as a primary path and configuring the indirect link as a secondary path.

In the above solution, the method further includes:
when the remote UE adds or activates the indirect link, configuring the indirect link as a primary path and configuring the NR direct link as a secondary path.

In the above solution, the method further includes:
deactivating related SRBs on the secondary path; or
keeping related SRBs on both the primary and secondary paths in an active state.

One embodiment of the present disclosure further provides a link configuration method, applied to a remote user equipment (UE), the method including:
obtaining a first SRB and/or a second SRB configured by a network device on a first link to the remote UE; wherein the first link represents an NR direct link or an indirect link.

In the above solution, the method further includes:
prioritizing usage of related SRBs on a primary path to transmit related signaling.

One embodiment of the present disclosure further provides a link configuration apparatus, including:
a first configuration unit used to configure a first SRB and/or a second SRB on a first link to a remote UE; wherein the first link represents an NR direct link or an indirect link.

One embodiment of the present disclosure further provides a link configuration apparatus, including:
an obtaining unit used to obtain a first SRB and/or a second SRB configured by a network device on a first link to a remote user equipment (UE); wherein the first link represents an NR direct link or an indirect link.

One embodiment of the present disclosure further provides a network device, including: a first processor and a first communication interface;
wherein the first processor is used to configure a first SRB and/or a second SRB on a first link to a remote UE; wherein the first link represents an NR direct link or an indirect link.

One embodiment of the present disclosure further provides a remote user equipment (UE), including: a second processor and a second communication interface;
wherein the second processor is used to obtain a first SRB and/or a second SRB configured by a network device on a first link to the remote UE; wherein the first link represents an NR direct link or an indirect link.

One embodiment of the present disclosure further provides a network device, including: a first processor and a first memory storing a computer program executable on the first processor;
wherein the first processor is used to, when running the computer program, execute steps of the method on the network device side.

One embodiment of the present disclosure further provides a remote user equipment (UE), including: a second processor and a memory storing a computer program executable on the second processor;
wherein the second processor is used to, when running the computer program, execute steps of the method on the remote UE side.

One embodiment of the present disclosure further provides a storage medium, including a computer program stored thereon; wherein the computer program, when executed by a processor, causes the processor to perform steps of the method on the network device side or steps of the method on the remote UE side.

In the link configuration method, apparatus, remote UE, network device, and storage medium provided by the embodiments of the present disclosure, the network device configures the first SRB and/or the second SRB on the first link to the remote UE, where the first link represents an NR direct link or an indirect link; the remote UE obtains the first SRB and/or the second SRB configured by the network device on the first link to the remote UE. Since the first SRB and/or the second SRB are configured on the first link to the remote UE, rather than on the initially established path between the remote UE and the network device, the first SRB and/or the second SRB will not become unavailable due to failure of the initially established path, thereby improving network robustness and reliability.

### BRIEF DESCRIPTION OF THE DRAWINGS

FIG. 1 is a schematic diagram of a communication system architecture in the related art;
FIG. 2 is a flowchart of a link configuration method according to an embodiment of the present disclosure;
FIG. 3 is a schematic diagram showing interaction of a link configuration method according to an embodiment of the present disclosure;
FIG. 4 is a schematic diagram showing interaction of a link configuration method according to an embodiment of the present disclosure;
FIG. 5 is a flowchart of a link configuration method according to an embodiment of the present disclosure;
FIG. 6 is a schematic diagram of a link configuration apparatus according to an embodiment of the present disclosure;
FIG. 7 is a schematic diagram of a link configuration apparatus according to an embodiment of the present disclosure;
FIG. 8 is a schematic diagram of a remote UE according to an embodiment of the present disclosure; and
FIG. 9 is a schematic diagram of a network device according to an embodiment of the present disclosure.

### DETAILED DESCRIPTION

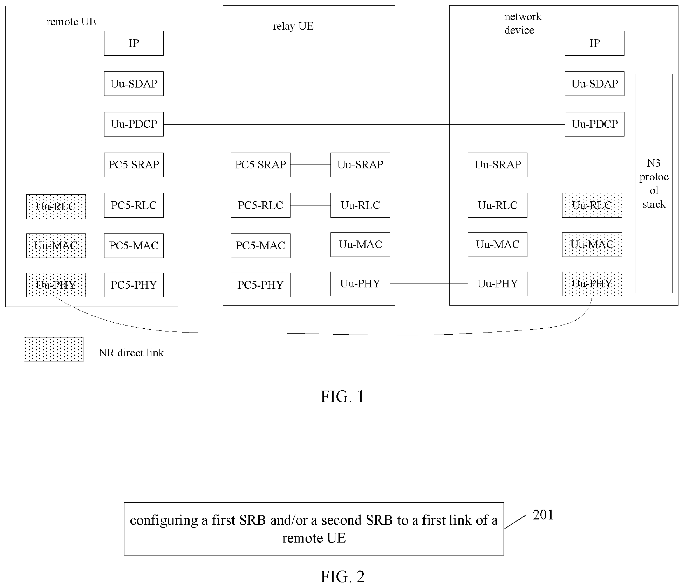

In the related art, the following two network access schemes are provided for a remote UE (Remote UE):
Scheme 1: the remote UE may choose to access the network device, such as a base station, via an NR direct link or a non-direct link. For example, the remote UE selects, according to predefined selection criteria, the NR direct link or the relay UE to access the network device. That is, the remote UE can directly switch between the NR direct link and the non-direct link. For a connected remote UE, the remote UE reports measurement information to the network device and performs relay UE reselection or switches to the NR direct link based on configurations delivered by the network device. However, the scheme 1 suffers from low network throughput.
Scheme 2: as shown in FIG. 1, the remote UE accesses the network device simultaneously through a relay UE and an NR direct link, where Uu interface is used for communication between the UE and the network device, and PC5 interface is used for communication between UEs.

In one scenario, the remote UE may first establish a connection with the network device through the relay UE; the remote UE reports measurement information to the network device and establishes an NR direct connection (i.e., adding an NR direct link) based on configurations delivered by the network device. In another scenario, the remote UE may first establish an NR direct connection; the remote UE reports measurement information to the network device and selects and adds an indirect link based on configurations delivered by the network device.

In the scheme 2, after adding the NR direct link or indirect link, the remote UE operates in a multi-connectivity mode. For the added NR direct link or indirect link, there may be one or more Radio Bearers (RBs) to improve system transmission reliability or throughput.

Although the scheme 2 improves network throughput, in the scheme 2, SRB1 and SRB2 are established on an initially established path. When the initially established path fails, both SRB1 and SRB2 become unavailable, resulting in communication failure between the remote UE and the network device, which results in insufficient network robustness due to over-reliance on the initially established path.

For example, when the remote UE establishes a Radio Resource Control (RRC) connection with the network device through the relay UE, SRB 1/SRB2 and Data Radio Bearer (DRB) are established via the relay UE; if the indirect link between the remote UE and the network device fails, SRB 1 and SRB2 become unavailable, resulting in insufficient network robustness. When the remote UE directly establishes an RRC connection with the network device, SRB 1/SRB2 and DRB are established between the remote UE and the network device, and only Split DRB exists on the relay UE; if the NR direct link between the remote UE and the network device fails, SRB 1 and SRB2 become unavailable, resulting in insufficient network robustness.

In view of this, in the embodiments of the present disclosure, the network device configures a first SRB and/or a second SRB on a first link to the remote UE; where the first link represents an NR direct link or an indirect link; the remote UE obtains the first SRB and/or the second SRB configured by the network device on the first link to the remote UE. Since the first SRB and/or the second SRB are configured on the first link to the remote UE, rather than on an initially established path between the remote UE and the network device, the first SRB and/or the second SRB will not become unavailable due to failure of the initially established path, thereby improving network robustness and reliability.

The present disclosure is further described in detail hereinafter with reference to the accompanying drawings and embodiments.

One embodiment of the present disclosure provides a link configuration method, applied to a network device which includes a base station. The method includes:
configuring a first SRB and/or a second SRB on a first link to a UE.

The first link represents an NR direct link or a non-direct link. The NR direct link refers to a link through which the UE (e.g., remote UE) is directly connected to the network device; the non-direct link may be an indirect link, sidelink, or non-standard link. The indirect link is also referred to as a PC5 link.

The UE may be a remote UE.

One embodiment of the present disclosure further provides a link configuration method, applied to a network device which includes a base station. Referring to FIG. 2, the method includes:
Step 201: configuring a first SRB and/or a second SRB on a first link to a remote UE.

The first link represents an NR direct link or an indirect link. The NR direct link refers to a link through which the remote UE is directly connected to the network device; the indirect link is also referred to as a PC5 link.

Here, in a scenario where the remote UE first accesses the network device through a remote UE and then adds an NR direct link, the network device configures the first SRB and/or the second SRB on the NR direct link to the remote UE.

In a scenario where the remote UE first accesses the network device through an NR direct link and then adds an indirect link, the network device configures the first SRB and/or the second SRB on the NR direct link to the remote UE.

It should be noted that the first SRB and the second SRB may be used to transmit RRC signaling and/or Non-Access Stratum (NAS) signaling. The first SRB includes Split SRB1, and the second SRB includes Split SRB2.

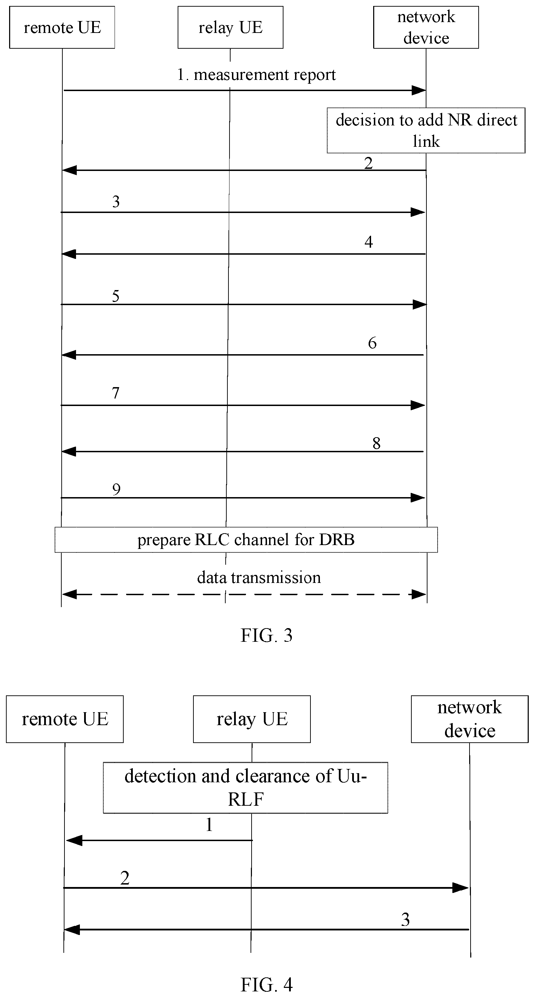

Taking FIG. 3 as an example, an implementation process of configuring the first SRB and/or the second SRB by the network device is described. As shown in FIG. 3, the link configuration method includes:
Step 1: the remote UE performs measurement based on measurement configuration delivered by the network device and reports a measurement result to the network device;
Step 2: the network device sends an RRC Reconfiguration Message to the remote UE;
Step 3: the remote UE sends a preamble to the network device;
Step 4: the network device sends a Random Access Response (RAR) to the remote UE;
Step 5: the remote UE sends an RRC Setup Request to the network device;
Step 6: the network device sends an RRC Setup Message to the remote UE.

It is to be noted that the remote UE and the network device complete random access through the steps 3 to 6. The RRC Setup Message is sent by the network device via SRB0. The RRC Setup Message includes configurations related to the first SRB, i.e., the network device configures the first SRB through the RRC Setup Message. The first SRB is Split SRB1.

Step 7: the remote UE sends an RRC Setup Complete Message to the network device.

Step 8: the network device sends an RRC Reconfiguration Message to the remote UE.

The RRC Reconfiguration Message includes configurations related to the second SRB, i.e., the network device configures the second SRB through the RRC Reconfiguration Message. The second SRB is Split SRB2.

Step 9: the network device sends an RRC Reconfiguration Complete Message to the remote UE.

In the scenario where the remote UE first accesses the network device through a remote UE and then adds an NR direct link, in one embodiment, the configuring the first SRB and/or the second SRB on the first link to the remote UE includes:
on the NR direct link to the remote UE, adding and activating Split SRB1, and/or adding and activating Split SRB2.

For example, when the remote UE first accesses the network device through a remote UE and then adds an NR direct link, the network device adds Split SRB 1 on the NR direct link to the remote UE and activates the added Split SRB1.

For another example, when the remote UE first accesses the network device through a remote UE and then adds an NR direct link, the network device adds Split SRB2 on the NR direct link to the remote UE and activates the added Split SRB2.

For another example, when the remote UE first accesses the network device through the remote UE and then adds an NR direct link, the network device adds and activates Split SRB 1 and adds and activates Split SRB2, on the NR direct link to the remote UE.

It is to be noted that in the scenario where the remote UE first accesses the network device through the remote UE and then adds the NR direct link, there are SRB 1 and/or SRB 1 on the indirect link between the remote UE and the network device. SRB2. Therefore, even if the indirect link between the remote UE and the network device fails, the remote UE can still use Split SRB 1 and/or Split SRB2 on the NR direct link to transmit relevant signaling to maintain communication between the remote UE and the network device, thereby improving reliability and stability of the network.

In the scenario where the remote UE first accesses the network device through the remote UE and then adds an NR direct link, SRB 1 and/or SRB2 exist on the indirect link between the remote UE and the network device. Based on this, in one embodiment, the method further includes:
deactivating SRB 1 and/or SRB2 on the indirect link; or
keeping SRB 1 and/or SRB2 on the indirect link in active state.

Here, when the remote UE first accesses the network device through the remote UE and then adds an NR direct link, when SRB 1 on the indirect link is in an active state, the network device deactivates SRB 1 on the indirect link; when SRB2 on the indirect link is in an active state, the network device deactivates SRB2 on the indirect link; when both SRB 1 and SRB2 on the indirect link are in the active state, the network device deactivates SRB 1 and SRB2 on the indirect link. The SRB in the active state can transmit relevant signaling, and the SRB in an inactive state cannot transmit relevant signaling.

Of course, when the remote UE first accesses the network device through the remote UE and then adds an NR direct link, the network device can also keep SRB 1 and/or SRB2 carried on the indirect link in the active state. At this point, the network device and the remote UE can use the activated SRB on the NR direct link and indirect link to transmit relevant signaling.

In a scenario where the remote UE first accesses the network device through an NR direct link and then adds an indirect link, in one embodiment, the configuring a first SRB and/or a second SRB on a first link to the remote UE, includes at least one of the following:
on the indirect link to the remote UE, adding Split SRB1 and configuring the Split SRB1 to be in an inactive state;
on the indirect link to the remote UE, adding Split SRB2 and configuring the Split SRB2 to be in an inactive state;
on the indirect link to the remote UE, adding and activating Split SRB1;
on the indirect link to the remote UE, adding and activating Split SRB2.

Here, when the remote UE first accesses the network device through the NR direct link and then adds an indirect link, the network device adds Split SRB 1 and/or Split SRB2 on the indirect link to the remote UE. The network device can activate or deactivate the added Split SRB1 and/or Split SRB2. Specific details are as follows.

The network device can add Split SRB 1 on the indirect link to the remote UE, and configure the Split SRB 1 to be in an inactive state. At this point, the added Split SRB 1 is in the inactive state by default.

When the remote UE first accesses the network device through the NR direct link and then adds an indirect link, the network device can add Split SRB2 on the indirect link to the remote UE and configure the Split SRB2 is in an inactive state. At this point, the added Split SRB2 is in the inactive state by default.

When the remote UE first accesses the network device through the NR direct link and then adds an indirect link, the network device can add and activate Split SRB 1 on the indirect link to the remote UE. At this point, the network device and the remote UE can use the activated Split SRB1 on the indirect link to transmit relevant signaling.

When the remote UE first accesses the network device through the NR direct link and then adds an indirect link, the network device can add and activate Split SRB2 on the indirect link to the remote UE. At this point, the network device and the remote UE can use the activated Split SRB2 on the indirect link to transmit relevant signaling.

It is to be noted that in the scenario where the remote UE first accesses the network device through the NR direct link and then adds an indirect link, there are SRB1 and/or SRB2 on the NR direct link between the remote UE and the network device. Therefore, even if the NR direct link between the remote UE and the network device fails, the remote UE can still use Split SRB 1 and/or Split SRB2 on the indirect link to transmit relevant signaling to maintain communication between the remote UE and the network device, thereby improving the reliability and stability of the network.

In the scenario where the remote UE first accesses the network device through the NR direct link and then adds an indirect link, there are SRB 1 and/or SRB2 on the NR direct link between the remote UE and the network device. Based on this, in one embodiment, the method further includes:
during activation of the NR direct link, keeping SRB 1 and/or SRB2 on the NR direct link in the active state.

Here, during activation of the NR direct link, the network device keeps SRB 1 and/or SRB2 on the NR direct link in an active state. As a result, the network device and the remote UE can use the activated SRB on the NR direct link and indirect link to transmit relevant signaling.

In the scenario where the remote UE first accesses the network device through the remote UE and then adds an NR direct link, when the added NR direct link is unavailable or fails, in order to quickly restore the radio link to improve robustness of the radio link and avoid the network device and the remote UE from performing RRC connection reestablishment to reconfigure the SRB, in one embodiment, the method further includes:
activating SRB 1 and/or SRB2 on the indirect link if any of the following conditions is met:
deleting or deactivating the NR direct link;
RLF occurring on the NR direct link;
reconfiguring the indirect link as a primary path.

Here, in a scenario where the remote UE first accesses the network device through the remote UE and then adds an NR direct link, SRB 1 and/or SRB2 exist on the indirect link between the remote UE and the network device. When any of the above conditions is met, the network device activates SRB 1 and/or SRB2 on the indirect link, so that the network device and the remote UE use the activated SRB 1 and/or SRB2 on the indirect link to transmit related signaling, to enable the network device and the remote UE to communicate normally.

For example, when the network device deletes or deactivates the NR direct link, the NR direct link does not exist or is unavailable. At this point, the network device activates SRB 1 and/or SRB2 on the indirect link, so that the network device and the remote UE use the activated SRB 1 and/or SRB2 on the indirect link to transmit relevant signaling.

For another example, when RLF occurs on the NR direct link, the NR direct link is unavailable. At this point, the network device activates SRB 1 and/or SRB2 on the indirect link, so that the network device and the remote UE use the activated SRB 1 and/or SRB2 on the indirect link to transmit relevant signaling.

For another example, when the network device reconfigures the indirect link as the primary path, the network device activates SRB 1 and/or SRB2 on the indirect link, so that the network device and the remote UE preferentially use the SRB on the primary path to transmit relevant signaling.

When the remote UE first accesses the network device through the remote UE and then adds the NR direct link, in case that the indirect link is unavailable or fails, in order to quickly restore the radio link to improve robustness of the radio link property and avoid the network device and the remote UE from performing RRC connection reestablishment to reconfigure the SRB, in one embodiment, the method further includes:
reconfiguring Split SRB 1 on the NR direct link as SRB 1, and/or reconfiguring Split SRB2 on the NR direct link as SRB2, if any of the following conditions is met:
adding NR direct link by the remote UE;
deleting or deactivating an indirect link;
Relay UE air interface radio link fails and RLF occurs;
SL between the relay UE and the remote UE fails;
reconfiguring the NR direct link as the primary path.

In one embodiment, the method further includes:
reconfiguring Split SRB 1 on the NR direct link as SRB 1, and/or reconfiguring Split SRB2 on the NR direct link as SRB2, If any of the following conditions is met:
deleting or deactivating an indirect link;
RLF occurs on the relay UE;
RLF occurs on the PC5 link;
reconfiguring the NR direct link as the primary path.

Here, after the remote UE first accesses the network device through the remote UE and then adds the NR direct link, if any of the above conditions is met, the network device reconfigures Split SRB1 on the NR direct link to SRB1, and/or, reconfigures Split SRB2 on the NR direct link to SRB2, so that the network device and the remote UE use SRB 1 and/or SRB2 on the NR direct link to transmit relevant signaling, thereby enabling the network device and the remote UE to communicate normally. The occurrence of RLF in the relay UE includes failure of the remote UE, occurrence of RLF in the NR link of the remote UE.

When the network device configures Split SRB1 on the NR direct link, the network device reconfigures Split SRB1 on the NR direct link as SRB 1. When the network device configures Split SRB2 on the NR direct link, the network device reconfigures Split SRB2 on the NR direct link as SRB2. When the network device configures Split SRB1 and Split SRB2 on the NR direct link, the network device can reconfigure Split SRB1 on the NR direct link as SRB1, and/or, reconfigure Split SRB2 on the NR direct link as SRB2.

Taking FIG. 4 as an example, an implementation process of the network device reconfiguring the Split SRB on the NR direct link to corresponding SRB when the indirect link is unavailable or fails, is described hereinafter.

Step 1: when the relay UE detects that its NR radio link fails, that is, the relay UE's Uu-RLF link fails, the relay UE sends a PC5-RRC message to the remote UE.

Step 2: the remote UE sends an RRC Reestablishment Request Message or RLF report to the network device.

Here, when the remote UE receives the PC5-RRC message, the remote UE initiates ab RRC reestablishment process by using the activated Split SRB1 and/or Split SRB2 on the NR direct link to directly send an RRC Reestablishment Request Message to the network device. Different from the related art, when the remote UE initiates the RRC reestablish procedure, the remote UE does not need to initiate reestablishment of SRB1 and/or SRB2 and corresponding Packet Data Convergence Protocol (PDCP) and Radio Link Control (RLC), which can reduce processing delay.

Alternatively, when the remote UE receives the PC5-RRC message, the remote UE can also send an RLF report (which may also be called relay UE RLF report) to the network device through the activated Split SRB1 and/or Split SRB2 on the NR direct link without initiating the RRC reestablishment procedure. The RLF report includes relay UE ID and RLF cause of the remote UE. The RLF cause includes at least one of the following:
RLF occurs on the PC5 link;
RLF occurs on the relay UE, which may specifically include the RLF cause of the relay UE.

The occurrence of RLF in the remote UE may include occurrence of RLF in the NR link of the remote UE.

Step 3: the network device sends an RRC Reconfiguration Message to the remote UE.

Here, after the network device receives the RRC Reestablishment Request Message sent by the remote UE, the network device sends an RRC Reconfiguration Message to the remote UE based on RRC Reestablishment Request Message, to reconfigure the remote UE, which specifically includes: reconfiguring Split SRB 1 on the NR direct link as SRB1, and/or, reconfiguring Split SRB2 on the NR direct link as SRB2.

When the network device receives the RLF report sent by the remote UE, based on the received RLF report, the network device sends an RRC Reconfiguration Message to the remote UE to reconfigure the remote UE, specifically including: reconfiguring Split SRB 1 on the NR direct link as SRB1, and/or, reconfiguring split SRB2 on the NR direct link as SRB2. The network device can also perform further processing based on the RLF cause of the remote UE included in the RLF report. For example, when the RLF report includes an RLF occurrence in the NR link of the relay UE, the network device restores the NR link of the relay UE; when the RLF report includes an RLF occurrence in the PC5 link, the network device sends relevant information of the relay UE, such as the mobility of the relay UE, to the remote UE connected to the relay UE.

It is to be noted that, in one embodiment, the step 1 in FIG. 4 can be omitted, that is, when RLF occurs in the PC5 link of the relay UE, the relay UE does not need to send a PC5-RRC message to the remote UE; when the remote UE detects that RLF occurs in the PC5 link, the remote UE sends an RRC Reestablishment Request Message or an RLF report to the network device.

In the case where the remote UE first accesses the network device through the NR direct link and then adds the indirect link, when the NR direct link is unavailable or fails, in order to quickly restore the radio link to improve robustness of the radio link property and avoid the network device and the remote UE from performing RRC connection reestablishment to reconfigure the SRB, in one embodiment, the method further includes:

reconfiguring Split SRB 1 on the indirect link as SRB 1, and/or reconfiguring Split SRB2 on the indirect link as SRB2, if any of the following condition is met:
deleting or deactivating the NR direct link;
RLF occurring on the NR direct link;
reconfiguring the indirect link as the primary path.

Here, when the remote UE first accesses the network device through the NR direct link and then adds an indirect link, there is SRB1 and/or SRB2 on the NR direct link between the remote UE and the network device. When any of the above conditions is met, the network device reconfigures Split SRB1 on the indirect link as SRB1, and/or reconfigures Split SRB2 on the indirect link as SRB2. Therefore, there is no need to reconfigure SRB 1 and/or SRB2 through RRC reestablishment. The network device and the remote UE can use SRB 1 and/or SRB2 on the indirect link to transmit relevant signaling, so that the network device and the remote UE can communicate normally.

When the network device configures Split SRB 1 on the indirect link, the network device reconfigures Split SRB 1 on the indirect link as SRB 1. When the network device configures Split SRB2 on the indirect link, the network device reconfigures Split SRB2 on the indirect link as SRB2. In the case where the network device configures Split SRB1 and Split SRB2 on the indirect link, the network device can reconfigure Split SRB1 on the indirect link as SRB1, and/or, reconfigure Split SRB2 on the indirect link as SRB2.

It is to be noted that when Split SRB1 on the indirect link is in an inactive state, the network device first activates Split SRB1 on the indirect link, and then reconfigures Split SRB1 on the indirect link as SRB1; when Split SRB2 on the indirect link is inactive, the network device first activates Split SRB2 on the indirect link, and then reconfigures Split SRB2 on the indirect link as SRB2.

In a scenario where the remote UE first accesses the network device through a relay UE and then adds an NR direct link, in order to reasonably utilize SRB, in one embodiment, the method further includes:
when the remote UE adds or activates the NR direct link, configuring the NR direct link as the primary path and configuring the indirect link as a secondary path.

Here, when the remote UE adds or activates an NR direct link, the network device configures the NR direct link as the primary path and configures the indirect link as the secondary path. At this point, the network device and the remote UE preferentially use the activated SRB on the NR direct link to transmit relevant signaling.

In a scenario where the remote UE first accesses the network device through an NR direct link and then adds an indirect link, in order to reasonably utilize SRB, in one embodiment, the method further includes:
when the remote UE adds or activates an indirect link, configuring the indirect link as a primary path, and configuring the NR direct link as a secondary path.

Here, when the remote UE adds or activates an indirect link, the network device configures the indirect link as the primary path, and configures the NR direct link as the secondary path. At this point, the network device and the remote UE preferentially use the activated SRB on the indirect link to transmit relevant signaling.

On the basis that the network device configures the primary path and the secondary path, in one embodiment, the method further includes:
deactivating relevant SRB on the secondary path; or
keeping relevant SRBs on both the primary path and the secondary path in the active state.

Here, when the remote UE first accesses the network device through the relay UE and then adds the NR direct link, since the network device configures the added NR direct link as the primary path and configures the indirect link as the secondary path, the network device can deactivate SRB 1 and/or SRB2 on the indirect link, so that the network device and the remote UE use only the activated SRB on the NR direct link to transmit relevant signaling. The network device can also keep Split SRB 1 and/or Split SRB2 on the NR direct link and SRB 1 and/or SRB2 on the indirect link active, so that the network device and the remote UE can use activated SRB on the NR direct link and indirect link to transmit relevant signaling.

When the remote UE first accesses the network device through the NR direct link and then adds an indirect link, since the network device configures the added indirect link as the primary path and configures the NR direct link as the secondary path, therefore, the network device can deactivate SRB1 and/or SRB2 on the NR direct link, so that the network device and the remote UE use only the activated SRB on the indirect link to transmit relevant signaling. The network device can also keep Split SRB1 and/or Split SRB2 on the indirect link and SRB1 and/or SRB2 on the NR direct link in the active state, so that the network device and the remote UE use the activated SRB on the NR direct link and indirect link to transmit related signaling.

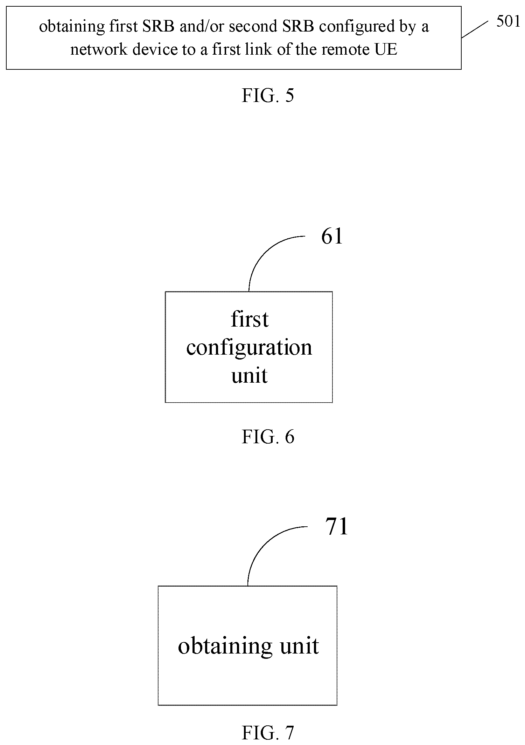

Correspondingly, one embodiment of the present disclosure further provides a link configuration method, which is applied to remote UE. Referring to FIG. 5, the method includes:
Step 501: obtaining first SRB and/or second SRB configured by a network device on a first link to the remote UE.

The first link represents an NR direct link or an indirect link.

Here, when the first link is to the remote UE, the remote UE obtains the first SRB and/or the second SRB configured by the network device on the added first link. The first SRB includes Split SRB1, and the second SRB includes Split SRB2.

For example, when the remote UE first accesses the network device through a relay UE and then adds an NR direct link, the remote UE obtains the Split SRB1 and/or Split SRB2 configured by the network device on the added NR direct link.

For another example, when the remote UE first accesses the network device through the NR direct link and then adds an indirect link, the remote UE obtains the Split SRB1 and/or Split SRB2 configured by the network device on the added indirect link.

In one embodiment, the method further includes:
preferentially using relevant SRB on the primary path to transmit relevant signaling.

Here, when the network device configures the primary path and the secondary path, the remote UE preferentially uses the relevant SRB on the primary path to transmit relevant signaling, such as RRC signaling and NAS signaling.

For example, in a scenario where the remote UE first accesses the network device through a relay UE and then adds an NR direct link, since the network device configures the NR direct link as the primary path and the indirect link as the secondary path, therefore, the remote UE preferentially uses the activated Split SRB 1 and/or Split SRB2 on the NR direct link to transmit relevant signaling.

For another example, in the scenario where the remote UE first accesses the network device through the NR direct link and then adds an indirect link, since the network device configures the indirect link as the primary path and configures the NR direct link as the secondary path, the remote UE preferentially uses the activated Split SRB1 and/or Split SRB2 on the indirect link to transmit relevant signaling.

The embodiments of the present disclosure will be further described hereinafter in conjunction with specific application scenarios.

In an application scenario where the remote UE first accesses the network device through a relay UE and then adds an NR direct link, the link configuration method is as follows.

Step 1: the network device configures a first SRB and/or a second SRB on the NR direct link to the remote UE.

Here, when the remote UE first accesses the network device through the relay UE and then adds an NR direct link, the network device adds and activates Split SRB1 and/or Split SRB2, on the NR direct link to the remote UE.

In one embodiment, the network device may further deactivate SRB 1 and/or SRB2 on the indirect link; or, keep SRB1 and/or SRB2 on the indirect link in an active state.

Here, when the network device deactivates SRB1 and/or SRB2 on the indirect link, the network device and the remote UE use only the activated SRB on the NR direct link to transmit relevant signaling.

When the network device keeps SRB 1 and/or SRB2 on the indirect link in the active state, the network device and the remote UE can use the activated SRB on the NR direct link and the indirect link to transmit relevant signaling.

In one embodiment, the method further includes:
activating, by the network device, SRB 1 and/or SRB2 on the indirect link, if any of the following condition is met:
deleting or deactivating the NR direct link;
RLF occurring on the NR direct link;
reconfiguring the indirect link as the primary path.

In one embodiment, the method further includes:
reconfiguring, by the network device, Split SRB 1 on the NR direct link as SRB1, and/or reconfiguring, by the network device, Split SRB2 on the NR direct link as SRB2, if any of the following condition is met:
deleting or deactivating the indirect link;
RLF occurring on the relay UE;
RLF occurring on the PC5 link;
reconfiguring the NR direct link as the primary path.

In one embodiment, the method further includes:
when the remote UE adds or activates an NR direct link, configuring, by the network device, the NR direct link as a primary path, and configuring the indirect link as a secondary path.

On the basis that the network device configures the primary path and the secondary path, in one embodiment, the method further includes:
deactivating, by the network device, the relevant SRB on the secondary path; or
keeping, by the network device, the relevant SRB on the primary path and the secondary path in an activated state.

Step 2: the remote UE obtains the first SRB and/or the second SRB configured by the network device on the added NR direct link.

On the basis that the network device configures a primary path and a secondary path, the remote UE preferentially uses the SRB on the primary path to transmit relevant signaling.

In an application scenario where the remote UE first accesses the network device through an NR direct link and then adds an indirect link, the link configuration method is as follows.

Step 1: the network device configures the first SRB and/or the second SRB on the indirect link to the remote UE.

Here, when the remote UE first accesses the network device through the NR direct link and then adds an indirect link,
Here, when the remote UE first accesses the network device through the NR direct link and then adds the indirect link, configuring, by the network device, the first SRB and/or the second SRB on the indirect link to the remote UE, includes at least one of the following:
on the indirect link to the remote UE, adding Split SRB1 and configuring the Split SRB1 to be inactive;
on the indirect link to the remote UE, adding Split SRB2 and configuring the Split SRB2 to be inactive;
on the indirect link to the remote UE, adding and activating Split SRB1;
on the indirect link to the remote UE, adding and activating Split SRB2.

In one embodiment, the method further includes:
during duration of activation of the NR direct link, keeping, by the network device, SRB1 and/or SRB2 on the NR direct link in the active state.

In one embodiment, the method further includes:
reconfiguring, by the network device, Split SRB1 on the indirect link as SRB1, and/or reconfiguring Split SRB2 on the indirect link as SRB2, if any of the following condition is met:
deleting or deactivating the NR direct link;
RLF occurring on the NR direct link;
reconfiguring the indirect link as the primary path.

Here, after the remote UE first accesses the network device through the NR direct link and then adds the indirect link, if any of the above condition is met, the network device reconfigures Split SRB1 on the indirect link as SRB1, and/or, reconfigures Split SRB2 on the indirect link as SRB2.

It is to be noted that when Split SRB 1 on the indirect link is in an inactive state, the network device first activates Split SRB1 on the indirect link, and then reconfigures Split SRB1 on the indirect link as SRB1; when the Split SRB2 on the indirect link is inactive, the network device first activates Split SRB2 on the indirect link, and then reconfigures Split SRB2 on the indirect link as SRB2.

In one embodiment, the method further includes:
when the remote UE adds or activates an indirect link, configuring, by the network device, the indirect link as the primary path and configuring the NR direct link as the secondary path.

On the basis that the network device configures the primary path and the secondary path, in an embodiment, the method further includes:
deactivating, by the network device, the relevant SRB on the secondary path; or,
keeping, by the network device, the relevant SRBs on both the primary path and the secondary path in the active state.

Step 2: the remote UE obtains the first SRB and/or the second SRB configured by the network device on the added indirect link.

On the basis that the network device configures the primary path and the secondary path, the remote UE preferentially uses the SRB on the primary path to transmit relevant signaling.

In the link configuration method, apparatus, remote UE, network device and storage medium provided in the embodiments of the present disclosure, the network device configures the first SRB and/or the second SRB on the first link to the remote UE, where the first link represents an NR direct link or an indirect link; the remote UE obtains the first SRB and/or the second SRB configured by the network device on the first link to the remote UE. Since the first SRB and/or the second SRB are configured on the first link to the remote UE, rather than on the path initially established between the remote UE and the network device, the first SRB and/or the second SRB will not become unavailable due to failure of the initially established path, thereby improving network robustness and reliability.

In order to implement the link configuration method of the embodiment of the present disclosure, one embodiment of the present disclosure further provides a link configuration apparatus, which is provided on a network device. As shown in FIG. 6, the apparatus includes:
a first configuration unit 61 used to configure a first SRB and/or a second SRB on a first link to a remote UE; where the first link represents an NR direct link or an indirect link.

In one embodiment, the first configuration unit 61 is specifically used to add and activate Split SRB 1 and/or add and activate Split SRB2, on the NR direct link to the remote UE.

In one embodiment, the apparatus further includes:
a second configuration unit used to deactivate SRB 1 and/or SRB2 on the indirect link; or,
keep SRB 1 and/or SRB2 on the indirect link active.

In one embodiment, the first configuration unit 61 is specifically used for at least one of the following:
on the indirect link to the remote UE, adding Split SRB 1 and configuring the Split SRB 1 to be in an inactive state;
on the indirect link to the remote UE, adding Split SRB2 and configuring the Split SRB2 to be in an inactive state;
on the indirect link to the remote UE, adding and activating Split SRB 1;
on the indirect link to the remote UE, adding and activating Split SRB2.

In one embodiment, the apparatus further includes:
a third configuration unit used to, during activation of the NR direct link, keep SRB 1 and/or SRB2 on the NR direct link in the active state.

In one embodiment, the apparatus further includes:
a fourth configuration unit used to activate SRB 1 and/or SRB2 on the indirect link if any of the following conditions is met:
deleting or deactivating the NR direct link;
RLF occurring on the NR direct link;
reconfiguring the indirect link as a primary path.

In one embodiment, the apparatus further includes:
a fifth configuration unit used to reconfigure Split SRB 1 on the NR direct link as SRB1, and/or reconfigure Split SRB2 on the NR direct link as SRB2, if any of the following conditions is met:
deleting or deactivating an indirect link;
RLF occurring on the remote UE;
RLF occurring on the PC5 link;
reconfiguring the NR direct link as the primary path.

In one embodiment, the apparatus further includes:
a fifth configuration unit used to reconfigure Split SRB 1 on the NR direct link as SRB1, and/or reconfigure Split SRB2 on the NR direct link as SRB2, if any of the following condition is met:
adding NR direct link by the remote UE;
deleting or deactivating an indirect link;
Relay UE air interface radio link fails and RLF occurs;
SL between the relay UE and the remote UE fails;
reconfiguring the NR direct link as the primary path.

In one embodiment, the apparatus further includes:
a sixth configuration unit used to reconfigure Split SRB 1 on the indirect link as SRB1, and/or reconfigure Split SRB2 on the indirect link as SRB2, if any of the following condition is met:
deleting or deactivating the NR direct link;
RLF occurring on the NR direct link;
reconfiguring the indirect link as a primary path.

In one embodiment, the apparatus further includes:
a seventh configuration unit used to configure the NR direct link as the primary path and configure the indirect link as the secondary path, when the remote UE adds or activates the NR direct link.

In one embodiment, the apparatus further includes:
an eighth configuration unit used to configure the indirect link as the primary path and configure the NR direct link as the secondary path, when the remote UE adds or activates the indirect link.

In one embodiment, the apparatus further includes:
a ninth configuration unit used to deactivate relevant SRB on the secondary path; or
keep relevant SRBs on both the primary path and the secondary path in the active state.

In actual application, the first configuration unit 61, the second configuration unit, the third configuration unit, the fourth configuration unit, the fifth configuration unit, the sixth configuration unit, the seventh configuration unit, the eighth configuration unit and the ninth configuration unit can be accomplished by a processor in the link configuration apparatus in conjunction with a communication interface.

It is to be noted that the link configuration apparatus provided in the above embodiment only takes division of the above program modules as an example to illustrate the link configuration. In practical applications, the above processing can be assigned to different program modules as needed, that is, an internal structure of the apparatus is divided into different program modules to complete all or part of the processing described above. In addition, the link configuration apparatus provided in the above embodiment and the link configuration method embodiment on the network device side belong to the same concept, and the specific implementation process is detailed in the method embodiment, which will not be repeated here.

In order to implement the link configuration method of the embodiment of the present disclosure, one embodiment of the present disclosure further provides a link configuration apparatus, which is provided on a remote UE. As shown in FIG. 7, the apparatus includes:
an obtaining unit 71 used to obtain a first SRB and/or a second SRB configured by a network device on a first link to the remote UE; where the first link represents an NR direct link or indirect link.

In one embodiment, the apparatus further includes:
a transmission unit used to preferentially use relevant SRB on the primary path to transmit relevant signaling.

In actual application, the obtaining unit 71 and the transmission unit can be implemented by a processor in the link configuration apparatus in conjunction with a communication interface.

It is to be noted that the link configuration apparatus provided in the above embodiment only takes division of the above program modules as an example to illustrate the link configuration. In practical applications, the above processing can be assigned to different program modules as needed, that is, an internal structure of the apparatus is divided into different program modules to complete all or part of the processing described above. In addition, the link configuration apparatus provided in the above embodiment and the link configuration method embodiment on the remote UE side belong to the same concept, and the specific implementation process is detailed in the method embodiment, which will not be repeated here.

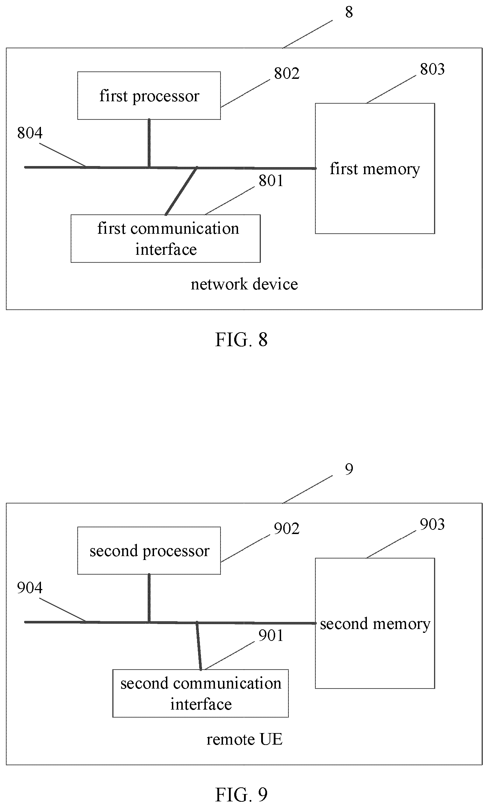

Based on the hardware implementation of the above program module, and in order to implement the method on the network device side of the embodiment of the present disclosure, one embodiment of the present disclosure further provides a network device. As shown in FIG. 8, the network device 8 includes:
a first communication interface 801 capable of exchanging information with other network nodes;
a first processor 802 connected to the first communication interface 801 to implement information interaction with other network nodes, and used to execute the method provided by one or more technical solutions on the network device side when running a computer program. The computer program is stored on a first memory 803.

Specifically, the first processor 802 configures a first signaling radio bearer (SRB) and/or a second SRB on a first link to the remote UE; where the first link represents a new radio (NR) direct link or indirect link.

In one embodiment, the first processor 802 is specifically used to add and activate Split SRB 1 and/or add and activate Split SRB2, on the NR direct link to the remote UE.

In one embodiment, the first processor 802 is further used to deactivate SRB 1 and/or SRB2 on the indirect link; or keep SRB 1 and/or SRB2 on the indirect link in an active state.

In one embodiment, the first processor 802 is specifically used for at least one of the following:
on the indirect link to the remote UE, adding Split SRB 1 and configuring the Split SRB 1 to be in an inactive state;
on the indirect link to the remote UE, adding Split SRB2 and configuring the Split SRB2 to be in an inactive state;
on the indirect link to the remote UE, adding and activating Split SRB 1;
on the indirect link to the remote UE, adding and activating Split SRB2.

In one embodiment, the first processor 802 is further used to keep SRB 1 and/or SRB2 on the NR direct link in an active state during duration of activation of the NR direct link.

In one embodiment, the first processor 802 is further used to:
activate SRB 1 and/or SRB2 on the indirect link if any of the following is met:
deleting or deactivating the NR direct link;
RLF occurring on the NR direct link;
reconfiguring the indirect link as a primary path.

In one embodiment, the first processor 802 is further used to:
reconfigure Split SRB 1 on the NR direct link as SRB1, and/or reconfigure Split SRB2 on the NR direct link as SRB2, if any of the following conditions is met:
deleting or deactivating an indirect link;
RLF occurring on the remote UE;
RLF occurring on the PC5 link;
reconfiguring the NR direct link as the primary path.

In one embodiment, the first processor 802 is further used to,
reconfigure Split SRB 1 on the NR direct link as SRB1, and/or reconfigure Split SRB2 on the NR direct link as SRB2, if any of the following conditions is met:
adding NR direct link by the remote UE;
deleting or deactivating the indirect link;
Relay UE air interface radio link fails and RLF occurs;
SL between the relay UE and the remote UE fails;
reconfiguring the NR direct link as the primary path.

In one embodiment, the first processor 802 is further used to,
reconfigure Split SRB 1 on the indirect link as SRB1, and/or reconfigure Split SRB2 on the indirect link as SRB2, if any of the following conditions is met:
deleting or deactivating the NR direct link;
RLF occurring on the NR direct link;
reconfiguring the indirect link as a primary path.

In one embodiment, the first processor 802 is further used to, when the remote UE adds or activates an NR direct link, configure the NR direct link as a primary path, and configure the indirect link as the secondary path.

In one embodiment, the first processor 802 is further used to, when the remote UE adds or activates an indirect link, configure the indirect link as the primary path, and configure the NR direct link as the secondary path.

In one embodiment, the first processor 802 is further used to deactivate the relevant SRB on the secondary path; or, keep the relevant SRB on the primary path and the secondary path in an active state.

It should be noted that the specific processing procedures of the first processor 802 and the first communication interface 801 can be understood with reference to the above method.

Of course, in actual application, various components in the network device 8 are coupled together through the bus system 804. It can be understood that the bus system 804 is used to implement connection communication between these components. In addition to data bus, the bus system 804 also includes a power bus, a control bus and a status signal bus. However, for the sake of clarity, various buses are all labeled as the bus system 804 in FIG. 8.

The first memory 803 in the embodiment of the present disclosure is used to store various types of data to support operations of the network device 8. Examples of such data include: any computer program operated on the network device 8.

The method disclosed in the above embodiments of the present disclosure can be applied in the first processor 802 or implemented by the first processor 802. The first processor 802 may be an integrated circuit chip with signal processing capabilities. During the implementation process, each step of the above method can be completed by an integrated logic circuit of hardware or software instructions in the first processor 802. The above first processor 802 can be a general-purpose processor, a digital signal processor (DSP), or other programmable logic devices, discrete gates or transistor logic devices, discrete hardware components, etc. The first processor 802 can implement or execute the methods, steps and logic block diagrams disclosed in the embodiments of the present disclosure. The general-purpose processor can be a microprocessor or any conventional processor, etc. In combination with the steps of the method disclosed in the embodiments of the present disclosure, it can be directly embodied as a hardware decoding processor to execute, or it can be executed by a combination of hardware and software modules in the decoding processor. The software module can be located in a storage medium, which is located in the first memory 803. The first processor 802 reads information in the first memory 803 and completes the steps of the above method in combination with its hardware.

In an exemplary embodiment, the network device 8 can be implemented by one or more application specific integrated circuits (ASIC), DSP, programmable logic device (PLD), complex programmable logic device (CPLD), field-programmable gate array (FPGA), general processor, controller, micro controller unit (MCU), microprocessor, or other electronic components, to execute the aforementioned method.

On the basis of the hardware implementation of the above program modules, and in order to implement the method on the remote UE side in the embodiment of the present disclosure, one embodiment of the present disclosure further provides a remote UE. As shown in Figure 9, the remote UE 9 includes:
a second communication interface 901 capable of exchanging information with other network nodes;
a second processor 902 connected to the second communication interface 901 to implement information interaction with other network nodes, and is used to execute the method provided by one or more technical solutions on the remote UE side when running a computer program. The computer program is stored on the second memory 903.

Specifically, the second processor 902 is used to obtain a first SRB and/or a second SRB configured by a network device on a first link to the remote UE; where the first link represents an NR direct link or indirect link.

In one embodiment, the second processor 902 is further used to: preferentially use relevant SRB on a primary path to transmit relevant signaling.

It is to be noted that the specific processing procedures of the second processor 902 and the second communication interface 901 can be understood with reference to the above method.

Of course, in actual application, various components in the remote UE 9 are coupled together through the bus system 904. It can be understood that the bus system 904 is used to implement connection communication between these components. In addition to data bus, the bus system 904 also includes a power bus, a control bus and a status signal bus. However, for the sake of clarity, various buses are labeled as bus system 904 in FIG. 9.

The second memory 903 in the embodiment of the present disclosure is used to store various types of data to support operations of the remote UE 9. Examples of such data include: any computer program operated on the remote UE 9.

The method disclosed in the above embodiments of the present disclosure can be applied to the second processor 902 or implemented by the second processor 902. The second processor 902 may be an integrated circuit chip with signal processing capabilities. During the implementation process, each step of the above method can be completed by an integrated logic circuit of hardware or software instructions in the second processor 902. The above second processor 902 can be a general-purpose processor, a digital signal processor (DSP), or other programmable logic devices, discrete gates or transistor logic devices, discrete hardware components, etc. The second processor 902 can implement or execute the methods, steps and logic block diagrams disclosed in the embodiments of the present disclosure. The general-purpose processor can be a microprocessor or any conventional processor, etc. In combination with the steps of the method disclosed in the embodiments of the present disclosure, it can be directly embodied as a hardware decoding processor to execute, or it can be executed by a combination of hardware and software modules in the decoding processor. The software module can be located in a storage medium, which is located in the second memory 903. The second processor 902 reads information in the second memory 903 and completes the steps of the above method in combination with its hardware.

In an exemplary embodiment, the remote UE 9 may be implemented by one or more ASICs, DSPs, PLDs, CPLDs, FPGAs, general-purpose processors, controllers, MCUs, Microprocessors, or other electronic components for performing the foregoing method.

It can be understood that the memory (first memory 803, second memory 903) in the embodiment of the present disclosure may be a volatile memory or a non-volatile memory, or may include both volatile and non-volatile memory. The non-volatile memory can be read-only memory (ROM), programmable read-only memory (PROM), erasable programmable read-only memory (EPROM), Electrically Erasable Programmable Read-Only Memory (EEPROM), ferromagnetic random access memory (FRAM), Flash Memory, Magnetic Surface Memory, optical disk, or Compact Disc Read-Only Memory (CD-ROM); the magnetic surface memory can be a magnetic disk memory or a magnetic tape memory. The volatile memory may be Random Access Memory (RAM), which is used as an external cache. By way of illustration, but not limitation, many forms of RAM are available, such as Static Random Access Memory (SRAM), Synchronous Static Random Access Memory (SSRAM), Dynamic Random Access Memory (DRAM), synchronous dynamic random access memory (SDRAM), double data rate synchronous dynamic random access memory (DDRSDRAM), Enhanced Synchronous Dynamic Random Access Memory (ESDRAM), SyncLink Dynamic Random Access Memory (SLDRAM), Direct Rambus Random Access Memory (DRRAM). The memory described in embodiments of the present disclosure is intended to include, but is not limited to, these and any other suitable types of memory.

In an exemplary embodiment, one embodiment of the present disclosure further provides a storage medium, that is, a computer storage medium, specifically a computer-readable storage medium, for example, including a first memory 803 storing a computer program. The above computer program can be executed by the first processor 802 of the network device 8 to complete the steps of the network device side method. For another example, the storage medium includes a second memory 803 storing the computer program, and the computer program can be executed by the second processor 802 of the remote UE 9 to complete the steps of the remote UE side method. The computer readable storage medium can be a memory such as FRAM, ROM, PROM, EPROM, EEPROM, Flash Memory, magnetic surface memory, optical disk, or CD-ROM.

It is to be noted that "first", "second", etc. are used to distinguish similar objects and are not necessarily used to describe a specific order or sequence.

The term "and/or" in this article is only a description of association relationship of associated objects, indicating that there can be three relationships. For example, A and/or B can represent: A exists alone, A and B exist at the same time, and B exists alone. In addition, the term "at least one" in this article refers to any one of a plurality of elements or any combination of at least two of a plurality of elements. For example, at least one of A, B, and C may refer to any one or more elements selected from the set including A, B, and C.

In addition, the technical solutions recorded in the embodiments of the present disclosure can be arbitrarily combined without conflict.

The above descriptions are only preferred embodiments of the present disclosure and are not intended to limit the scope of the present disclosure.

## Claims

1. A link configuration method, applied to a network device, the method comprising:
configuring a first signaling radio bearer (SRB) and/or a second SRB on a first link to a remote user equipment (UE); wherein the first link represents a new radio (NR) direct link or an indirect link.

2. The method according to claim 1, wherein the configuring the first SRB and/or the second SRB on the first link to the remote UE, includes:
adding and activating a split SRB1, and/or adding and activating a split SRB2, on the NR direct link to the remote UE.

3. The method according to claim 2, further comprising:
deactivating the SRB1 and/or the SRB2 on the indirect link; or
keeping the SRB1 and/or the SRB2 on the indirect link in an active state.

4. The method according to claim 1, wherein the configuring the first SRB and/or the second SRB on the first link to the remote UE, includes at least one of:
adding a split SRB 1 on the indirect link to the remote UE and configuring the split SRB1 to be in an inactive state;
adding a split SRB2 on the indirect link to the remote UE and configuring the split SRB2 to be in an inactive state;
adding and activating a split SRB1 on the indirect link to the remote UE;
adding and activating a split SRB2 on the indirect link to the remote UE.

5. The method according to claim 4, further comprising:
during activation of the NR direct link, keeping the SRB1 and/or the SRB2 on the NR direct link in an active state.

6. The method according to any one of claims 1 to 3, further comprising:
activating SRB1 and/or SRB2 on the indirect link when any one of the following conditions is met:
deletion or deactivation of the NR direct link;
occurrence of a radio link failure (RLF) on the NR direct link;
reconfiguration of the indirect link as a primary path.

7. The method according to any one of claims 1 to 3, further comprising:
reconfiguring a split SRB 1 on the NR direct link as SRB1, and/or reconfiguring a split SRB2 on the NR direct link as SRB2, when any one of the following conditions is met:
the remote UE adding the NR direct link;
deletion or deactivation of the indirect link;
occurrence of RLF on an air interface of the remote UE;
failure of a sidelink between a relay UE and the remote UE;
reconfiguration of the NR direct link as a primary path.

8. The method according to claim 1, 4, or 5, further comprising:
reconfiguring a split SRB 1 on the indirect link as SRB1, and/or reconfiguring a split SRB2 on the indirect link as SRB2, when any one of the following conditions is met:
deletion or deactivation of the NR direct link;
occurrence of RLF on the NR direct link;
reconfiguration of the indirect link as a primary path.

9. The method according to claim 1, further comprising:
when the remote UE adds or activates the NR direct link, configuring the NR direct link as a primary path and configuring the indirect link as a secondary path.

10. The method according to claim 1, further comprising:
when the remote UE adds or activates the indirect link, configuring the indirect link as a primary path and configuring the NR direct link as a secondary path.

11. The method according to claim 9 or 10, further comprising:
deactivating related SRBs on the secondary path; or
keeping related SRBs on both the primary and secondary paths in an active state.

12. A link configuration method, applied to a remote user equipment (UE), the method comprising:
obtaining a first signaling radio bearer (SRB) and/or a second SRB configured by a network device on a first link to the remote UE; wherein the first link represents a new radio (NR) direct link or an indirect link.

13. The method according to claim 12, further comprising:
prioritizing usage of related SRBs on a primary path to transmit related signaling.

14. A link configuration apparatus, comprising:
a first configuration unit used to configure a first signaling radio bearer (SRB) and/or a second SRB on a first link to a remote user equipment (UE); wherein the first link represents a new radio (NR) direct link or an indirect link.

15. A link configuration apparatus, comprising:
an obtaining unit used to obtain a first signaling radio bearer (SRB) and/or a second SRB configured by a network device on a first link to a remote user equipment (UE); wherein the first link represents a new radio (NR) direct link or an indirect link.

16. A network device, comprising: a first processor and a first communication interface;
wherein the first processor is used to configure a first signaling radio bearer (SRB) and/or a second SRB on a first link to a remote user equipment (UE); wherein the first link represents a new radio (NR) direct link or an indirect link.

17. A remote user equipment (UE), comprising: a second processor and a second communication interface;
wherein the second processor is used to obtain a first signaling radio bearer (SRB) and/or a second SRB configured by a network device on a first link to the remote UE; wherein the first link represents a new radio (NR) direct link or an indirect link.

18. A network device, comprising: a first processor and a first memory storing a computer program executable on the first processor;
wherein the first processor is used to, when running the computer program, execute steps of the method according to any one of claims 1 to 11.

19. A remote user equipment (UE), comprising: a second processor and a memory storing a computer program executable on the second processor;
wherein the second processor is used to, when running the computer program, execute steps of the method according to claim 12 or 13.

20. A storage medium, comprising a computer program stored thereon; wherein the computer program, when executed by a processor, causes the processor to perform steps of the method according to any one of claims 1 to 11 or steps of the method according to claim 12 or 13.
